# EUROPEAN PATENT APPLICATION

(11) **EP 4 163 258 A1**
(43) Date of publication of application: **12.04.2023**
(21) Application number: 22168116.6
(22) Date of filing: 13.04.2022
(51) Int. Cl.: C01G 53/00, H01M 4/525

(54) **METHOD OF MANUFACTURING A CATHODE MATERIAL PRECURSOR**

(30) Priority: 06.10.2021 TW 110137243
(71) Applicant: SolidEdge Solution Inc., 300094 Hsinchu City (TW); Hon Hai Precision Industry Co., Ltd., 236038 New Taipei City (TW)
(72) Inventor: HUNG, Chen-Tsung, 300094 Hsinchu City (TW); LAI, Hong-Zheng, 300094 Hsinchu City (TW); CHANG, Tseng-Lung, 300094 Hsinchu City (TW)
(74) Representative: Winter, Brandl - Partnerschaft mbB

(57) **Abstract**

The disclosure provides a method of manufacturing a uniform cathode material precursor, including steps of: (A) providing an acidic solution of co-precipitating cations including at least one co-precipitating cation; (B) mixing at least one basic solution with the acidic solution of co-precipitating cations to produce a co-precipitating colloid; (C) performing a nano-grinding process on the acidic solution of co-precipitating cations; and optionally (D) performing a hydrothermal aging process; wherein the step (C) is performed before and/or simultaneously with the step (B); and the optional step (D) is performed simultaneously with the step (B) and/or after the step (C); and wherein the step (B), the step (C) and the optional step (D) are performed continuously without washing and/or filtration post-processing.

## Description

### BACKGROUND

### Field of Invention

The present disclosure relates to a method of preparing a cathode material precursor, in particular, a method of continuously preparing a cathode material precursor, and enabling the production of a cathode material precursor.

### Description of Related Art

With the rise and progress of various electronic and electric products, the demand for lithium batteries is also increasing. In the technology of manufacturing cathode materials for lithium batteries, co-precipitation is often used to produce cathode materials with multiple elements. When forward titration is used for co-precipitation, the pH ranges of metal hydroxides precipitated by the reaction of different cations with alkali are different. As a result, different metal hydroxides precipitate successively, resulting in component segregation. It is thus difficult to achieve atomic or molecular uniformity of the components of the cathode material. When back titration is used, different metal hydroxides can be rapidly and simultaneously precipitated, and mixing uniformity of components is thus better than that of forward titration. However, the back titration is affected by solubility product (Ksp), and the cations cannot be precipitated completely according to the designed stoichiometry.

In order to increase the precipitation amount, today's technology involves further hydrothermal aging after the co-precipitation process, which increases the precipitation amount by increasing the temperature and pressure. However, since cations cannot be fully precipitated according to the designed stoichiometry and sodium ions, potassium ions, etc. that must be removed are often left behind after forward and back titrations, the metal hydroxides obtained after co-precipitation and hydrothermal ageing need to undergo additional post-treatment processes such as washing and filtration. Therefore, today's cathode material precursors cannot be produced in a consecutive process, resulting in high manufacturing costs, and failing to maintain effective cation precipitation according to the designed stoichiometry.

Therefore, a solution is needed to solve the above technical problems, so that the cathode material precursors can be produced in a consecutive process and the cations can be effectively precipitated according to the designed stoichiometry. The reduce process cost can thus be reduced and the yield and quality can be improved.

### SUMMARY

In some embodiments of the present disclosure, the present disclosure provides a method of preparing a cathode material precursor, including steps of: (A) providing an acidic solution of co-precipitating cations having at least one co-precipitating cation, (B) mixing at least one basic solution with the acidic solution of co-precipitating cations to produce a co-precipitating colloid, (C) performing a nano-grinding process on the acidic solution of co-precipitating cations, and optionally (D) performing a hydrothermal aging process, wherein step (C) is performed before and/or simultaneously with step (B), and the optional step (D) is performed simultaneously with step (B) and/or after step (C), and wherein step (B), step (C) and the optional step (D) are performed continuously without washing and/or filtration post-processing.

In some embodiments of the present disclosure, the at least one co-precipitating cation comprises Co²⁺, Ni²⁺, Ni³⁺, Mn²⁺, Al³⁺ , Cr³⁺, Mg²⁺, Ti⁴⁺, Zr²⁺, Zr⁴⁺, Fe²⁺, Fe³⁺ or a combination thereof.

In some embodiments of the present disclosure, the at least one co-precipitating cation is provided in a form comprising a salt that is completely soluble in a solvent, such as, but not limited to, a nitrate, sulfate, chloride or a combination thereof.

In some embodiments of the present disclosure, the at least one co-precipitating cation may further be provided in a form comprising a salt that is insoluble to the solvent, such as, but not limited to, a hydroxide, carbonate, oxide or a combination thereof.

In some embodiments of the present disclosure, the at least one basic solution comprises Li₂CO₃ or LiOH.

In some embodiments of the present disclosure, the cathode material precursor is used to prepare a cathode material represented by the following formula I or formula II:
formula I: Li₁₊ₓM¹_{y}M²_{z}M³ₚM⁴_{q}O₄, wherein 0≤x≤0.1, 0≤y≤0.6, 0≤z≤0.2, 1.4≤p≤2, 0≤q≤0.2, and y+z+p+q=2;
formula II: Li₁₊ₓM¹_{y}M²_{z}M³ₚM⁴_{q}O₂, wherein 0≤x≤0.10, 0.33≤y≤1.00, 0≤z≤0.33, 0≤p≤0.4, 0≤q≤0.05, and y+z+p+q=1;
wherein, M is selected from the group consisting of Co, Ni, Mn, Al, Cr, Mg, Ti, Zr and Fe.

In some embodiments of the present disclosure, the nano-grinding process is performed at about from 20°C to 60°C.

In some embodiments of the present disclosure, the hydrothermal aging process is performed at about from 100°C to 180°C and from 1 bar to 1.5 bars.

In some embodiments of the present disclosure, the acidic solution of co-precipitating cations comprises a liquid solvent comprising water, ethanol, acetone, propanol, or a combination thereof.

### BRIEF DESCRIPTION OF THE DRAWINGS

The present disclosure can be more fully understood by reading the following detailed description of the embodiment, with reference made to the accompanying drawings as follows. It should be understood that, according to industry practice, the various features are not drawn to scale. In fact, for the sake of clarity, the size of the various features can be arbitrarily increased or decreased.
Fig. 1 is a flowchart illustrating a method of preparing a cathode material precursor according to one embodiment of the present disclosure.
Fig. 2 is a flowchart illustrating a method of preparing a cathode material precursor according to another embodiment of the present disclosure.
Fig. 3 is a flowchart illustrating a method of preparing a cathode material precursor according to yet another embodiment of the present disclosure.
Fig. 4 is an X-ray diffraction (XRD) spectrum of the cathode material precursor of lithium-ion batteries prepared according to the flowchart of Fig. 1 according to the present disclosure after calcination.
Fig. 5 is a scanning electron microscope (SEM) image of the cathode material precursor of lithium-ion batteries prepared according to the flowchart of Fig. 1 according to the present disclosure after calcination.
Fig. 6 is an XRD spectrum of the cathode material precursor of lithium-ion batteries prepared according to the flowchart of Fig. 3 according to the present disclosure after calcination.
Fig. 7 is a SEM image of the cathode material precursor of lithium-ion batteries prepared according to the flowchart of Fig. 3 according to the present disclosure after calcination.

### DETAILED DESCRIPTION

To make the present disclosure more detailed and complete, the embodiments and specific examples are described in detail below. However, this is not the only form of implementing or applying specific embodiments of the present disclosure. The embodiments disclosed below may be combined or substituted for each other where useful or other embodiments may be added to one embodiment without further recital or description.

As used herein, the terms "contain", "include", "have" and the like refer to the features, areas, integers, steps, operations, elements and/or components specified therein, but do not exclude other features, areas, integers, steps, operations, elements, components, and/or a combination thereof.

The method of preparing a cathode material precursor of the present disclosure improves the mixing uniformity and yield of cathode material precursor and maintains effective precipitation of cations according to the designed stoichiometry by performing the co-precipitating process and nano-grinding process simultaneously and/or by performing the nano-grinding process before the co-precipitating process, and optionally with further hydrothermal aging process. In addition, the present invention directly uses an alkali salt containing lithium (Li₂CO₃ or LiOH) as a precipitant for precipitating cations, so there is no need for post-treatment processes such as washing and/or filtration to remove alkali ions such as sodium and potassium in the manufacturing process.

### Preparation example 1

LiNi_{0.48}Cr_{0.04}Mn_{1.48}O₄ stoichiometric precursor was prepared by co-precipitating process, nano-grinding process, and hydrothermal aging process.

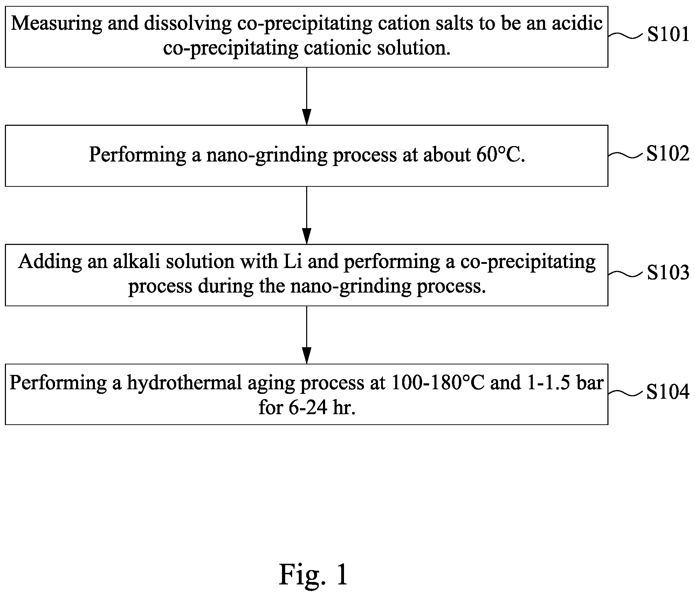

With respect to this preparation example, please refer to FIG. 1, which is a flowchart of the method of preparing a cathode material precursor according to one embodiment of the present disclosure.

Firstly, as shown in step S101 in Fig. 1, the co-precipitating cationic salts were measured and dissolved into an acidic solution of co-precipitating cations. In this preparation example, the amount of nickel nitrate (Ni²⁺) and chromium nitrate (Cr³⁺) required was measured and dissolved into an acidic solution of co-precipitating cations. It should be noted that in some embodiments, the co-precipitating cations may include, but are not limited to, Co²⁺, Ni²⁺, Ni³⁺, Mn²⁺, Al³⁺, Cr³⁺, Mg²⁺, Ti⁴⁺, Zr²⁺, Zr⁴⁺, Fe²⁺, Fe³⁺ or a combination thereof. In some embodiments, the aforementioned co-precipitating cations may be provided in a form comprising a salt that is completely soluble and dissociable from the solvent, such as (but not limited to) a nitrate, sulfate, chloride, or a combination thereof; and optionally, the at least one co-precipitating cation may further be provided in a form including a salt that is insoluble to the solvent, such as (but not limited to) a hydroxide, carbonate, oxide, or a combination thereof. In some embodiments, the solvent used include water, ethanol, acetone, propanol, or a combination thereof.

Then, as shown in step S102, the temperature of the acidic solution of co-precipitating cations prepared in step S101 was adjusted to a temperature ranging from about 20°C to about 60°C and the nano-grinding process was performed. The increase in solution temperature facilitates the subsequent co-precipitating reaction during the addition of alkali solution. In some embodiments, the nano-grinding process may operate at a temperature of, but is not limited to, from about 20°C to about 25°C, from about 25°C to about 30°C, from about 30°C to about 35°C, from about 35°C to about 40°C, from about 40°C to about 45°C, from about 45°C to about 50°C, from about 50°C to about 55°C, from about 55°Cto about 60°C, or a combination thereof.

Referring to step S103 in Fig. 1, the nano-grinding process was still in progress while the co-precipitating process was being performed. Firstly, the pH of the acidic solution of co-precipitating cations was adjusted to 4-5 by adding the required amount of manganese carbonate (MnCO₃) to induce partial precipitation of the aforementioned cations (Ni²⁺ and Cr³⁺) into metal hydroxides. Then, the required amount of lithium carbonate Li₂CO₃ (or lithium hydroxide LiOH) was added during the nano-grinding process to bring the pH value above 6 to further precipitate more of the aforementioned cations (Li⁺, Ni²⁺ and Cr³⁺) into metal hydroxides. At this point, the acidic solution of co-precipitating cations reacted to become co-precipitating colloid.

It should be noted that MnCO₃ and Li₂CO₃ (or LiOH) were used as precipitants in this preparation example, where Mn and Li were also required for the final product. As such, no alkali solution containing sodium (Na), potassium (K), etc. was used to adjust the pH, so there was no need to go through additional processes such as washing and filtering. Moreover, since the nano-grinding process was not interrupted, after addition of MnCO₃ and Li₂CO₃ (or LiOH), the mechanical force of nano-grinding process dispersed and homogenized the metal hydroxides, MnCO₃ and Li₂CO₃ (or LiOH) to achieve atomic/molecular mixing uniformity.

Referring to step S104, the original reaction tank with the co-precipitating colloid formed in step S103 was then heated to 100°C-180°C, and the pressure was increased to 1-1.5 bar for 6-24 hours of hydrothermal aging process. This step was to further complete the hydration reaction of the cations and to get close to the target yield, as well as to improve the crystallinity of the cathode material precursors. Finally, the co-precipitating colloid was dried to obtain the precursor with uniform components. The precursor was calcined to remove water molecules, carbon dioxide, nitrate, etc. to obtain the corresponding cathode material LiNi_{0.48}Cr_{0.04}Mn_{1.48}O₄.

It is noted that the nano-grinding process, co-precipitating process, and hydrothermal aging process mentioned in steps S102, S103 and S104 mentioned of this preparation example can be interchanged, and the hydrothermal aging process can be omitted. The specific preparation examples will be described later.

Specifically, this preparation example uses salts of cations, which are required for the cathode material precursor itself, as precipitants, thus eliminating the need for washing, filtering, etc. in the prior art process. In addition, an uninterrupted nano-grinding is carried out to achieve atomic/molecular mixing uniformity of the metal hydroxides, MnCO₃, Li₂CO₃ (or LiOH). In this way, the hydration reaction can achieve complete reaction during the hydrothermal aging process, and the cathode material precursor with yields equal to initial stoichiometry can be prepared.

### Preparation example 2

LiNi_{0.48}Cr_{0.04}Mn_{1.48}O₄ stoichiometric precursor was prepared by co-precipitating process, nano-grinding process, and hydrothermal aging process.

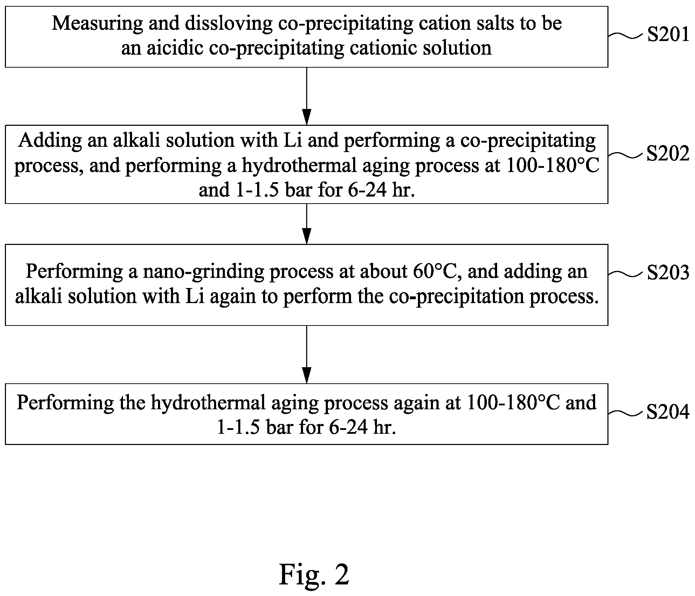

With respect to this preparation example, please refer to Fig. 2, which is a flowchart of the method of preparing a cathode material precursor according to another embodiment of the present disclosure.

Firstly, the operation of step S201 in Fig. 2 is substantially the same as that of the S101 in preparation example 1. The amount of the co-precipitating cationic salts were measured and dissolved into an acidic solution of co-precipitating cations. In this preparation example, the co-precipitating cations measured were nickel nitrate (Ni²⁺), manganese nitrate (Mn²⁺) and chromium nitrate (Cr³⁺), and then the aforementioned co-precipitating cations were dissolved into the acidic solution of co-precipitating cations. It should be noted that in some embodiments, the co-precipitating cations may include, but are not limited to, Co²⁺, Ni²⁺, Ni³⁺, Mn²⁺, Al³⁺, Cr³⁺, Mg²⁺, Ti⁴⁺, Zr²⁺, Zr⁴⁺, Fe²⁺, Fe³⁺ or a combination thereof. In some embodiments, the aforementioned co-precipitating cations may be provided in a form comprising a salt that is completely soluble and dissociable from the solvent, such as (but not limited to) a nitrate, sulfate, chloride, or a combination thereof; and optionally, the at least one co-precipitating cation may further be provided in a form including a salt that is insoluble to the solvent, such as (but not limited to) a hydroxide, carbonate, oxide, or a combination thereof. In some embodiments, the solvents used include water, ethanol, acetone, propanol, or a combination thereof.

Then, as shown in Step S202, the strong alkali LiOH was directly added into the acidic solution of co-precipitating cations prepared in step S201, and the pH of the solution was raised to >7. In addition, the reaction tank was heated to 100°C-180°C, and the pressure was raised to 1-1.5 bar for 6-24 hours of hydrothermal aging process. At this point, the acidic solution of co-precipitating cations has gradually reacted to co-precipitating colloid.

Referring to step S203 in Fig. 2, the temperature of the mixed solution of the acidic solution of co-precipitating cations and the co-precipitating colloid formed in step S202 was adjusted to a temperature ranging from about 20°C to about60°C, and the nano-grinding process was performed. Increasing the solution temperature may facilitate the co-precipitating reaction during subsequent addition of alkali. In some embodiments, the nano-grinding process may operate at a temperature of, but is not limited to, from about 20°C to about 25°C, from about 25°C to about 30°C, from about 30°C to about 35°C, from about 35°C to about 40°C, from about 40°C to about 45°C, from about 45°C to about 50°C, from about 50°C to about 55°C, from about 55°C to about 60°C, or a combination thereof.

Meanwhile, reference to step S203 was continued. The nano-grinding process was still in progress while the required amount of lithium carbonate Li₂CO₃ (or lithium hydroxide LiOH) was added again to facilitate the precipitation of more of the aforementioned cations (Li⁺, Ni²⁺, Mn²⁺, Cr³⁺) into metal hydroxides. It should be noted that the Li₂CO₃ (or LiOH) was used as a precipitant in this preparation example and Li was also a required component for the final product. As a result, no alkali solution containing sodium (Na), potassium (K), etc. was used to adjust the pH, so there was no need to go through additional processes such as washing and filtering. Moreover, since the nano-grinding process was not interrupted, after addition of Li₂CO₃ (or LiOH), the mechanical force of nano-grinding process dispersed and homogenized the metal hydroxides and Li₂CO₃ (or LiOH) to atomic/molecular mixing uniformity.

Refer to step S204, the original reaction tank containing the co-precipitating colloid formed in step S203 was then heated to 100°C-180°C, and the pressure was increased to 1-1.5 bar for 6-24 hours of hydrothermal aging process. This step was to further make the cation hydration reaction nearly complete, and close to the target yield, and to improve the crystallinity of the cathode material precursors. Finally, the co-precipitating colloid was dried to obtain the precursor with uniform components. The precursor may be calcined to remove water molecules, carbon dioxide, nitrate, etc. to obtain the corresponding cathode material LiNi_{0.48}Cr_{0.04}Mn_{1.48}O₄.

### Preparation example 3

LiNi_{0.48}Cr_{0.04}Mn_{1.48}O₄ stoichiometric precursor was prepared by co-precipitating process and nano-grinding process.

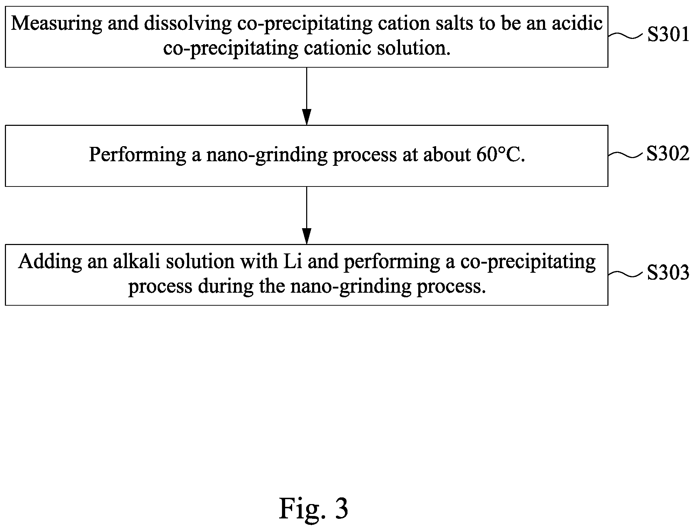

With respect to this preparation example, please refer to FIG. 3, which Fig. 3 is a flowchart of the method of preparing a cathode material precursor according to yet another embodiment of the present disclosure. Please note that the hydrothermal aging process in the preparation example 1 and the preparation example 2 was omitted in this preparation example.

First, as shown in step S301 in Fig. 3, the amount of the co-precipitating cationic salts were measured and dissolved into an acidic solution of co-precipitating cations. In this preparation example, the nickel nitrate (Ni²⁺) and chromium nitrate (Cr³⁺) were measured according to demand and dissolved into an acidic solution of co-precipitating cations. It should be noted that in some embodiments, the co-precipitating cations may include, but are not limited to, Co²⁺, Ni²⁺, Ni³⁺, Mn²⁺, Al³⁺, Cr³⁺, Mg²⁺, Ti⁴⁺, Zr²⁺, Zr⁴⁺, Fe²⁺, Fe³⁺ or a combination thereof. In some embodiments, the aforementioned co-precipitating cations may be provided in a form comprising a salt that is completely soluble and dissociable from the solvent, such as (but not limited to) a nitrate, sulfate, chloride, or a combination thereof; optionally, the at least one co-precipitating cation may further be provided in a from including a salt that is insoluble to the solvent, such as (but not limited to) a hydroxide, carbonate, oxide, or a combination thereof. In some embodiments, the solvents used include water, ethanol, acetone, propanol, or a combination thereof.

Step S302, the temperature of the acidic solution of co-precipitating cations prepared in the preceding step S301 was adjusted to a temperature from about 20°C to about 60°C, and the nano-grinding process was performed. Increasing the solution temperature may facilitate the co-precipitating reaction during subsequent addition of alkali. In some embodiments, the nano-grinding process may operate at a temperature of, but is not limited to, from about 20°C to about 25°C, from about 25°C to about 30°C, from about 30°C to about 35°C, from about 35°C to about 40°C, from about 40°C to about 45°C, from about 45°C to about 50°C, from about 50°C to about 55°C, from about 55°C to about 60°C, or a combination thereof.

Step S303, which was basically the same as step S103 in preparation example 1. The co-precipitating process was performed at the simultaneous as the nano-grinding process. The pH of the acidic solution of co-precipitating cations was adjusted to 4-5 by adding the required amount of MnCO₃ to induce partial precipitation of the aforementioned cations (Ni²⁺ and Cr³⁺) into metal hydroxides. Then, the required amount of Li₂CO₃ (or LiOH) was added during the nano-grinding process to make the pH value greater than 6 to further precipitate more of the aforementioned cations (Li⁺, Ni²⁺ and Cr³⁺) into metal hydroxides. At this point, the acidic solution of co-precipitating cations was reacted to the co-precipitating colloid.

It should be noted that MnCO₃ and Li₂CO₃ (or LiOH) were used as precipitants in this preparation example, and Mn and Li were also required components for the final product. As a result, no alkali solution containing sodium (Na), potassium (K), etc. was used to adjust the pH, so there was no need to go through additional processes such as washing and filtering. Moreover, since the nano-grinding process was not interrupted, after addition of MnCO₃ and Li₂CO₃ (or LiOH), the mechanical force of nano-grinding process dispersed and homogenized the metal hydroxides, MnCO₃ and Li₂CO₃ (or LiOH) to atomic/molecular mixing uniformity.

In this preparation example, the hydrothermal aging process was omitted, and the co-precipitating colloid prepared in Step S303 was dried directly to obtain the cathode material precursor. The precursor may be calcined to remove water molecules, carbon dioxide, nitrate, etc. to obtain the corresponding cathode material LiNi_{0.48}Cr_{0.04}Mn_{1.48}O₄.

### Embodiment 1

LiNi_{0.48}Cr_{0.04}Mn_{1.48}O₄ obtained after the calcination of the cathode material precursor prepared in preparation example 1 was examined by X-ray diffraction (XRD) and scanning electron microscope (SEM).

The purpose of this example is to show whether the cathode material precursor obtained after the calcination after preparing the cathode material precursor using the method of the present disclosure can have a pure phase and good crystallinity.

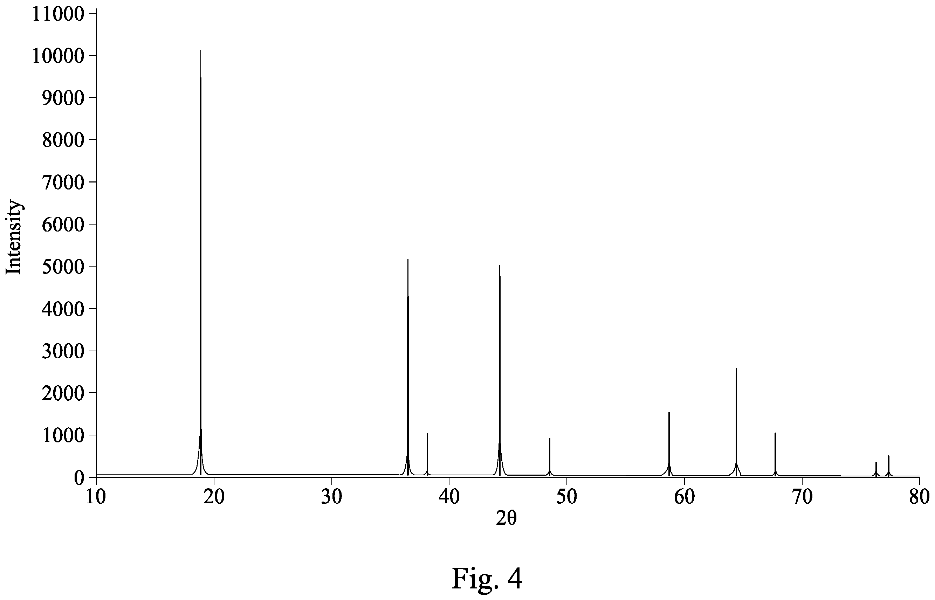

The X-ray diffraction (XRD) spectrum of the cathode material LiNi_{0.48}Cr_{0.04}Mn_{1.48}O₄ obtained by calcination of the cathode material precursor for lithium-ion batteries prepared according to the method flowchart in Fig. 1 is shown in Fig. 4. As can be seen from Fig. 4, the cathode material precursors revealed in the present disclosure have sharp and obvious diffraction picks after calcination, and have an ideal LiM₂O₄ spinel structure, so they are pure phase substances with good crystallinity.

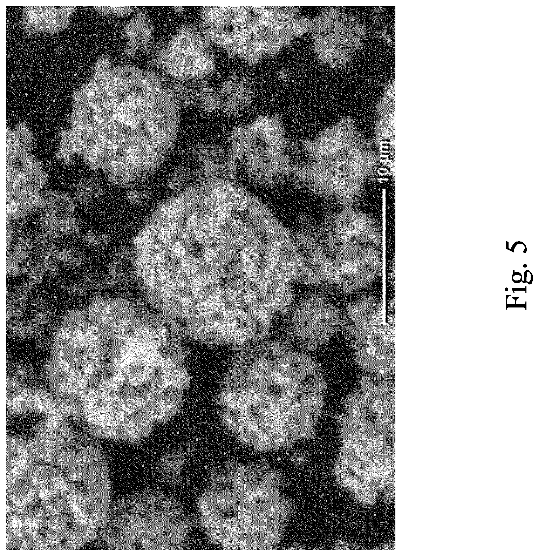

Next, please refer to Fig. 5, which show the SEM image of the cathode material LiNi_{0.48}Cr_{0.04}Mn_{1.48}O₄ obtained by calcination of the cathode material precursor for lithium-ion batteries prepared according to the method flowchart of Fig. 1 of the present disclosure. As can be seen from Fig. 5, LiNi_{0.48}Cr_{0.04}Mn_{1.48}O₄ obtained after the calcination of the cathode material precursor prepared in preparation example 1 has well-defined boundaries and high crystal development.

### Embodiment 2

LiNi_{0.48}Cr_{0.04}Mn_{1.48}O₄ obtained after the calcination of the cathode material precursor prepared in preparation example 3 was examined by XRD and SEM.

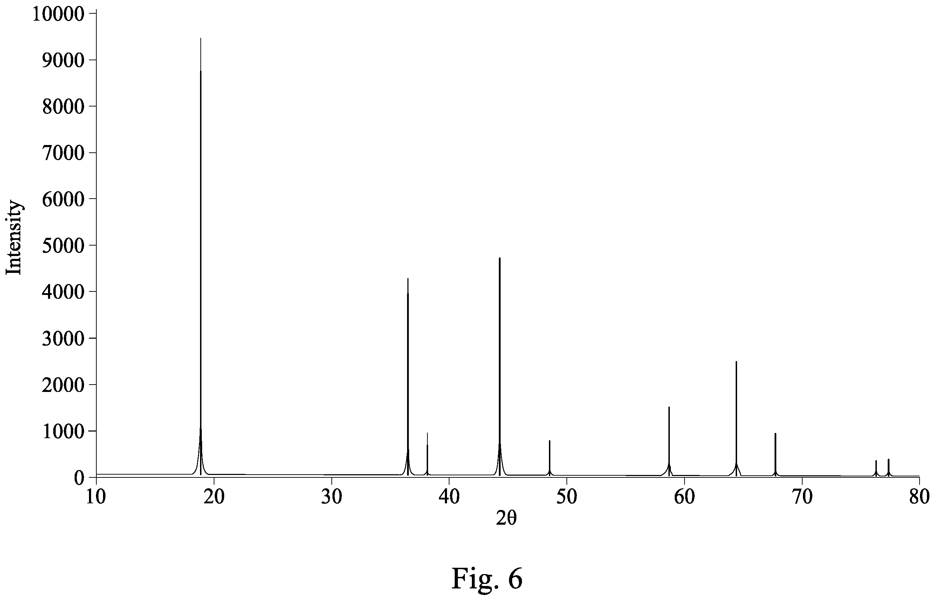

The XRD spectrum of the cathode material LiNi_{0.48}Cr_{0.04}Mn_{1.48}O₄ obtained by calcination of the cathode material precursor for lithium ion batteries prepared according to the method flowchart in Fig. 3 of the present disclosure. It can be seen from Fig. 6 that, even if the hydrothermal aging process is omitted, in the case of the co-precipitating process combined with nano-grinding process, the prepared cathode material precursors still have sharp and obvious diffraction picks after calcination, and have an ideal LiM₂O₄ spinel structure, so they are pure phase substances with good crystallinity.

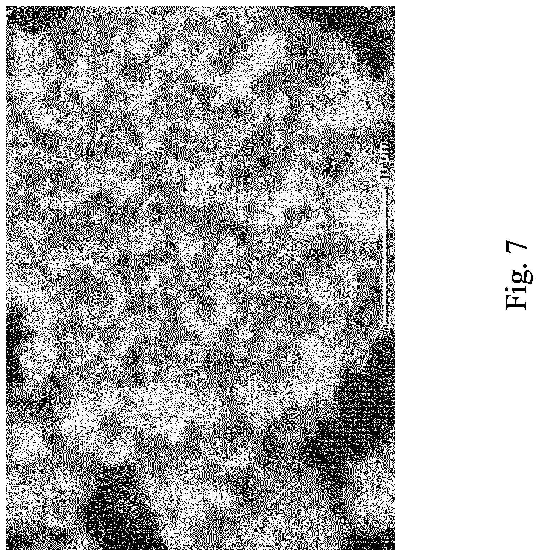

Please refer to Fig. 7, which shows the SEM image of the cathode material LiNi_{0.48}Cr_{0.04}Mn_{1.48}O₄ obtained by calcination of the cathode material precursor for lithium-ion batteries prepared according to the method the flowchart of Fig. 3 of the present disclosure. As can be seen from Fig. 7, after the hydrothermal aging process is omitted, the crystal size of LiNi_{0.48}Cr_{0.04}Mn_{1.48}O₄ obtained after calcination of the prepared cathode material precursors is smaller than that of embodiment 1. But it does not affect the phase purity and crystallinity.

In summary, the method of preparing a cathode material precursor disclosed herein improves the mixing uniformity and yield of the cathode material precursors by performing the co-precipitating process and the nano-grinding process simultaneously and/or performing the nano-grinding process before the co-precipitating process, and optionally performing the hydrothermal aging process. As such, the cations could effectively precipitate according to the design stoichiometry. Furthermore, basic salts containing lithium (such as Li₂CO₃ or LiOH) are directly used as precipitants to precipitate cations, thus eliminating the need for post-treatment processes such as washing and/or filtration in the manufacturing process, and enabling continuous completion of all preparation processes. Therefore, the present disclosure can greatly reduce the manufacturing cost and process of manufacturing cathode material precursors and maintain the yield and quality of the cathode material precursors at the same time.

## Claims

1. A method of manufacturing a cathode material precursor, comprising steps of:
(A) providing an acidic solution of co-precipitating cations comprising at least one co-precipitating cation;
(B) mixing at least one basic solution with the acidic solution of co-precipitating cations to produce a co-precipitating colloid;
(C) performing a nano-grinding process on the acidic solution of co-precipitating cations; and
optionally (D) performing a hydrothermal aging process;
wherein step (C) is performed before and/or simultaneously with step (B); and the optional step (D) is performed simultaneously with step (B) and/or after step (C); and
wherein step (B), step (C) and the optional step (D) are performed continuously without washing and/or filtration post-processing.

2. The method of claim 1, wherein the at least one co-precipitating cation comprises Co²⁺, Ni²⁺, Ni³⁺, Mn²⁺, Al³⁺, Cr³⁺, Mg²⁺, Ti⁴⁺, Zr²⁺, Zr⁴⁺, Fe²⁺, Fe³⁺ or a combination thereof.

3. The method of claim 1 or 2, wherein the at least one co-precipitating cation is provided in a from comprising a nitrate, sulfate, chloride or a combination thereof.

4. The method of claim 3, wherein the at least one co-precipitating cation is further provided in a form comprising a hydroxide, carbonate, oxide or a combination thereof.

5. The method of any one of claims 1 to 4, wherein the at least one basic solution comprises Li₂CO₃ or LiOH.

6. The method of any one of claims 1 to 5, wherein the cathode material precursor is used to prepare a cathode material represented by the following formula I or formula II:
formula I: Li₁₊ₓM¹_{y}M²_{z}M³ₚM⁴_{q}O₄, wherein 0≤x≤0.1, 0≤y≤0.6, 0≤z≤0.2, 1.4≤p≤2, 0≤q≤0.2, and y+z+p+q=2;
formula II: Li₁₊ₓM¹_{y}M²_{z}M³ₚM⁴_{q}O₂, wherein 0≤x≤0.10, 0.33≤y≤1.00, 0≤z≤0.33, 0≤p≤0.4, 0≤q≤0.05, and y+z+p+q=1;
wherein, M is selected from the group consisting of Co, Ni, Mn, Al, Cr, Mg, Ti, Zr and Fe.

7. The method of any one of claims 1 to 6, wherein the nano-grinding process is performed at about from 20°C to 60°C.

8. The method of any one of claims 1 to 7, wherein the hydrothermal aging process is performed at about from 100°C to 180°C and from 1 bar to 1.5 bar.

9. The method of any one of claims 1 to 8, wherein the acidic solution of co-precipitating cations comprises a liquid solvent comprising water, ethanol, acetone, propanol, or a combination thereof.
